(19) **Europäisches Patentamt / European Patent Office / Office européen des brevets**

(11) **EP 3 075 656 B1**

(12) **FASCICULE DE BREVET EUROPEEN**

(45) Date de publication et mention de la délivrance du brevet:
**20.02.2019 Bulletin 2019/08**

(51) Int Cl.:
**B64C 27/51** *(2006.01)* **B64F 5/60** *(2017.01)*
**F16F 1/38** *(2006.01)*

(21) Numéro de dépôt: **16162637.9**

(22) Date de dépôt: **29.03.2016**

(54) **DISPOSITIF POUR AERONEF A VOILURE TOURNANTE APTE A FOURNIR UNE INFORMATION RELATIVE AU NIVEAU D'ENDOMMAGEMENT PAR FATIGUE DE CE DISPOSITIF**

VORRICHTUNG FÜR DREHFLÜGELFLUGZEUG, DIE IN DER LAGE IST, EINE INFORMATION BEZÜGLICH DES MATERIALERMÜDUNGSSCHADENS DIESER VORRICHTUNG ZU LIEFERN

DEVICE FOR ROTARY-WING AIRCRAFT CAPABLE OF PROVIDING INFORMATION ON THE LEVEL OF DAMAGE DUE TO FATIGUE OF SAID DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.03.2015 FR 1552721**

(43) Date de publication de la demande:
**05.10.2016 Bulletin 2016/40**

(73) Titulaire: **HUTCHINSON**
**75008 Paris (FR)**

(72) Inventeurs:
• **BELTRAN, Eduardo**
**94800 VILLEJUIF (FR)**
• **BRICHE, Florian**
**92300 LEVALLOIS PERRET (FR)**

(74) Mandataire: **Gevers & Orès**
**41 avenue de Friedland**
**75008 Paris (FR)**

(56) Documents cités:
**EP-A1- 0 456 384 FR-A1- 2 860 582**
**JP-A- 2006 349 068 US-A1- 2013 164 131**

EP 3 075 656 B1

**Description**

La présente invention concerne un dispositif, destiné à être interposé entre deux pièces d'un aéronef à voilure tournante qui sont susceptibles de subir un mouvement relatif répété l'une par rapport à l'autre et, apte à fournir une information relative au niveau d'endommagement par fatigue du dispositif.

Un exemple d'aéronef à voilure tournante est un hélicoptère.

FR 2 949 432 (D1) propose un tel dispositif, en l'occurrence un amortisseur destiné à être installé sur un rotor d'aéronef à voilure tournante.

La solution envisagée dans ce document consiste à prévoir une chambre unique au sein d'une couche en élastomère.

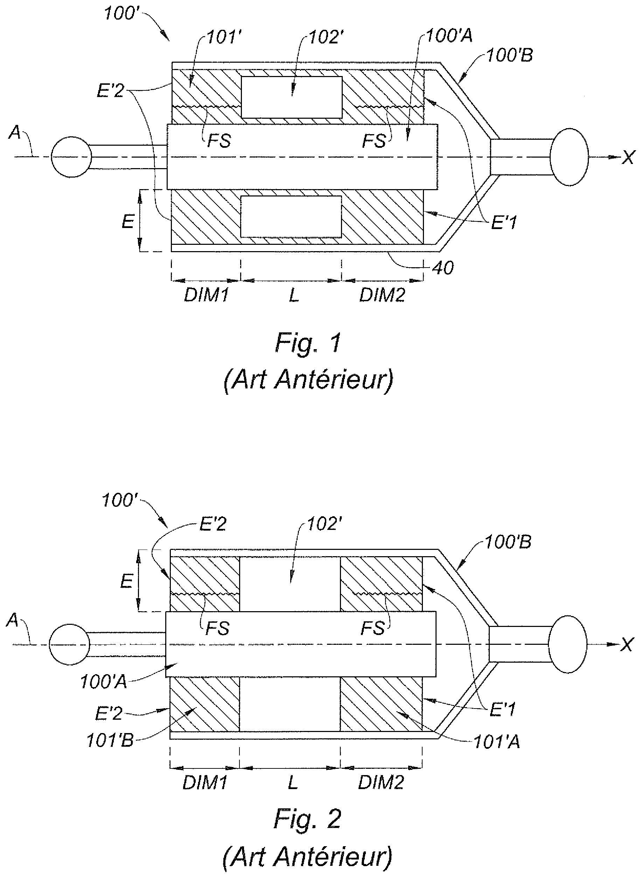

Deux modes de réalisation de cet amortisseur sont présentés à l'appui de la figure 1 et de la figure 2, respectivement.

Cet amortisseur 100' comprend deux éléments d'armature 100'A, 100'B destinés à être chacun monté sur l'une des pièces d'un rotor d'aéronef à voilure tournante.

Sur la figure 1, l'amortisseur 100' comprend une couche en élastomère 101' disposée entre les deux éléments d'armature 100'A, 100'B et une chambre unique 102' disposée au sein de la couche 101' en élastomère. La chambre unique 102' est remplie d'un liquide coloré. La chambre unique 102' est disposée à une distance prédéterminée DIM1, DIM 2 de l'une et/ou l'autre des extrémités E'1, E'2 de la couche en élastomère.

Sous l'effet d'un mouvement relatif répété des pièces du rotor d'aéronef à voilure tournante, une ou plusieurs fissure(s) se propagent depuis l'une au moins des extrémités E'1, E'2 de la couche 101' en élastomère en direction de la chambre unique 102'. Cette fissure est caractéristique d'un endommagement par fatigue de la couche 101' en élastomère.

Lorsque cette fissure atteint la chambre unique 102', le liquide coloré contenu dans la chambre unique passe par la fissure et a tendance à sortir de l'amortisseur 100'.

Ainsi, lors d'une opération de maintenance, un technicien peut se rendre compte de la fuite de liquide hors de la chambre unique 102' et en déduire que la pièce doit être changée.

Un autre exemple d'un amortisseur est divulgué dans le document JP2006349068.

De ce fait, la solution proposée dans le document D1 évite à un technicien de maintenance de réaliser une mesure de la profondeur et/ou de la largeur de la fissure.

Par ailleurs, dans la mesure où la chambre unique 102' présente une section de forme annulaire faisant le tour complet de la couche en élastomère autour de son axe longitudinal, on s'assure que toute fissure se propageant depuis l'une au moins des extrémités E'1, E'2 de la couche en élastomère 101' en direction de la chambre unique 102', est en mesure d'atteindre cette chambre unique 102'.

Toutefois, la présence de cette chambre unique 102', laquelle présente un section annulaire faisant le tour complet de la couche en élastomère autour de son axe longitudinal, altère les propriétés mécaniques, en particulier les propriétés dynamiques, de l'amortisseur 100', par rapport à un amortisseur classique (à savoir sans chambre comme celle qui est proposée dans le document D1, toutes choses égales par ailleurs, en particulier concernant ses dimensions).

La présence d'une telle chambre 102' peut également avoir un impact négatif sur la durée de vie (fatigue) de l'amortisseur.

L'altération des propriétés mécaniques peut être accentuée, par rapport à un tel amortisseur classique, lorsque la chambre unique 102' scinde, en outre, la couche en élastomère 101' en deux parties distinctes 101'A, 101'B, comme cela est représenté sur la figure 2.

Ceci peut également avoir un impact négatif sur la durée de vie (fatigue) de l'amortisseur.

Un objectif de l'invention est de proposer un dispositif du type précité apte à fournir une information relative au niveau d'endommagement par fatigue dudit dispositif permettant de limiter l'altération des propriétés mécaniques, par rapport à un dispositif tel que celui proposé dans le document D1.

Un autre objectif de l'invention est par ailleurs de proposer un tel dispositif qui permet en outre de minimiser l'altération des propriétés mécaniques, par rapport à un dispositif classique.

A cet effet, l'invention propose un dispositif destiné à être interposé entre deux pièces d'un aéronef à voilure tournante qui sont susceptibles de subir un mouvement relatif répété, le dispositif comprenant :

- au moins deux éléments d'armature destinés à être montés sur l'une au moins des deux pièces de l'aéronef, et
- au moins une couche en élastomère disposée entre les deux éléments d'armature, ladite au moins une couche étant délimitée par une première surface $S_I$ appartenant au volume interne $V_{int}$ du dispositif, une deuxième surface $S_E$ appartenant également au volume interne $V_{int}$ du dispositif et une surface extérieure $S_{ext}$ n'appartenant pas au volume interne $V_{int}$ du dispositif,

ledit dispositif comprenant, au sein du volume interne $V_{int}$ au dispositif, au moins deux poches indépendantes chacune disposée à une distance prédéterminée de la surface extérieure $S_{ext}$, chaque poche étant remplie d'un produit P capable de s'écouler hors de sa poche lorsqu'une fissure s'est propagée depuis ladite surface extérieure $S_{ext}$ vers la poche concernée.

Ce dispositif pourra également présenter l'une au moins des caractéristiques suivantes, prises seules ou en combinaison :

- le produit P présente une couleur différente de la couleur de ladite au moins une couche en élastomère ;
- le produit P présente des propriétés de luminescence, par exemple obtenues avec un additif tel qu'un azurant optique, que ne présente pas la couche en élastomère ;
- le produit P est choisi parmi un élastomère apte à être distingué visuellement de l'élastomère formant une couche en élastomère, un liquide, un gaz sous pression, une pâte ou un gel ;
- le produit P étant un élastomère, celui-ci se présente sous la forme de miettes calibrées ;
- le produit P étant un liquide ou un gaz sous pression, le dispositif comprend un capteur de pression de ce liquide ou de ce gaz sous pression ;
- lesdites au moins deux poches indépendantes sont situées à une même distance prédéterminée de la surface extérieure $S_{ext}$ ;
- lesdites au moins deux poches indépendantes sont situées à des distances prédéterminées différentes de la surface extérieure $S_{ext}$ ;
- la surface $S_{f,T}$, de l'ensemble des poches, projetée orthogonalement sur une surface de référence $S_{ref}$ de ladite au moins une couche en élastomère représente au plus 5% de cette surface de référence, la surface de référence étant une surface présentant une forme identique à l'une et/ou l'autre des première et deuxième surfaces délimitant ladite au moins une couche en élastomère et qui sont dans le volume interne $V_{int}$ au dispositif ;
- la surface $S_{f,T}$, de l'ensemble des poches, projetée orthogonalement sur une surface de référence $S_{ref}$ de ladite au moins une couche en élastomère représente au plus 4% de cette surface de référence et de préférence au plus 3% de cette surface de référence ;
- le dispositif comprend, entre les deux armatures, un empilement comportant ladite au moins une couche en élastomère et au moins une coupelle réalisée en un matériau non élastomère plus rigide que l'élastomère formant ladite au moins une couche en élastomère ;
- au moins l'une desdites au moins deux poches indépendantes traverse au moins une couche en élastomère et au moins une coupelle ;
- au moins l'une desdites au moins deux poches indépendantes s'étend d'un élément d'armature à l'autre ;
- lesdites au moins deux poches indépendantes sont réalisées dans une couche en élastomère, sans traverser une coupelle ;
- lesdites au moins deux poches indépendantes sont réalisées dans une même couche en élastomère ;
- lesdites au moins deux poches indépendantes sont réalisées dans deux couches en élastomère différentes ;
- le dispositif est choisi parmi : une butée lamifiée, un amortisseur, un palier lamifié, une rotule lamifiée, une articulation lamifiée.

L'invention sera mieux comprise et d'autres buts, avantages et caractéristiques de celle-ci apparaîtront plus clairement à la lecture de la description qui suit et qui est faite au regard des dessins annexés, sur lesquels :

- la figure 3 représente une vue générale d'un rotor principal d'hélicoptère ;
- la figure 4 (a) est une vue éclatée d'un amortisseur conforme à l'invention, à l'état neuf, la figure 4(b) est une vue, selon une coupe longitudinale, de la couche en élastomère de la figure 4(a) et la figure 4(c) est une coupe transversale de la couche en élastomère de la figure 4(a) selon le plan de coupe A-A représenté sur la figure 4(b) ;
- la figure 5(a) est une vue similaire de celle de la figure 4(a), mais lorsque l'amortisseur doit être changé et la figure 5(b) est une coupe transversale de la couche en élastomère de la figure 5(a) ;
- la figure 6, laquelle comprend les figures 6(a) à 6(d) fournit quelques données géométriques d'un amortisseur testé expérimentalement ;
- la figure 7 représente quelques données précisant les conditions de mises en oeuvre du test d'endommagement par fatigue réalisé sur l'amortisseur de la figure 6 ;
- la figure 8 est une vue représentant ce qui est observable depuis l'extérieur de l'amortisseur, à l'issue de test d'endommagement par fatigue ;
- la figure 9, qui comporte les figures 9(a) et 9(b), représente une articulation lamifiée cylindrique conforme à l'invention selon une vue de côté et une vue en coupe respectivement ;
- la figure 10, qui comporte les figures 10(a) à 10(c), représente une butée lamifiée conforme à l'invention selon une vue en perspective, une vue de côté et une vue en coupe, respectivement ;
- la figure 11, qui comporte les figures 11(a) à 11(c), représente une rotule lamifiée conforme à l'invention selon une vue en perspective, une vue de face et une vue en coupe, respectivement ;

- la figure 12, qui comporte les figures 12(a) à 12(c), représente un palier lamifié conforme à l'invention, de forme rectangulaire, et selon une vue en perspective, de côté et en coupe, respectivement ;

- la figure 13, qui comprend les figures 13(a) et 13(b) représente une couche en élastomère d'un amortisseur selon la figure 4(a), selon une vue longitudinale et une vue en coupe transversale partielle, respectivement.

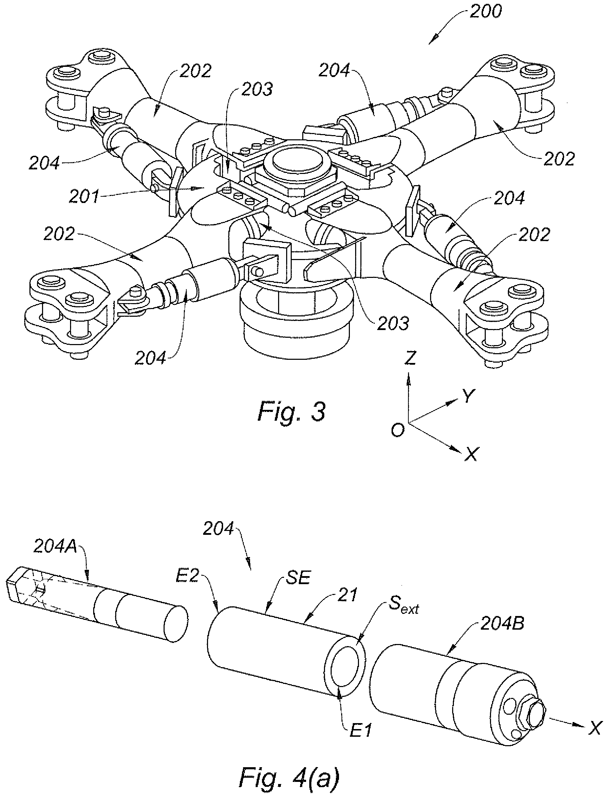

La figure 3 représente un rotor 200 principal d'un aéronef à voilure tournante lequel on peut distinguer un moyeu 201 et des manchons 202 s'étendant radialement à partir du moyeu 201 et destinés à porter les pales (non représentées) de cet aéronef.

On relève la présence de butées lamifiées 203, en l'occurrence sphériques, disposées entre le moyeu 201 et l'extrémité de chacun des manchons 202 située du côté du moyeu 201.

On note également la présence d'amortisseurs 204, disposés entre le moyeu 201 et l'extrémité opposée de chacun des manchons 202. Ils sont généralement nommés amortisseurs moyeu-pale. Ces amortisseurs 204 ne sont généralement pas lamifiés.

Les butées lamifiées sphériques 203 et les amortisseurs 204 sont typiquement des dispositifs qui peuvent faire l'objet de l'invention.

Il convient également de noter que, si la figure 3 représente un rotor principal, l'invention peut également s'appliquer à des butées lamifiées ou amortisseurs, par exemple non lamifiés, susceptibles d'être mis en oeuvre sur le rotor arrière (non illustré) d'un tel aéronef.

D'autres dispositifs utilisables pour un tel aéronef, par exemple des butées lamifiées planes, des articulations cylindriques ou coniques, des rotules lamifiées ou encore des amortisseurs pale-pale (non représentés sur les figures annexées), peuvent également faire l'objet de l'invention. Ces dispositifs ne sont pas nécessairement installés au niveau d'un rotor d'un aéronef à voilure tournante.

La figure 4(a) représente, selon une vue en perspective éclatée, un amortisseur 204 conforme à l'invention

L'amortisseur 204 comprend un premier élément d'armature 204A (armature centrale), par exemple réalisé en un matériau métallique, un deuxième élément d'armature 204B (armature extérieure), qui peut également être réalisé en un matériau métallique, et une couche en élastomère 21 remplissant l'espace entre les deux éléments d'armature 204A, 204B. L'armature centrale 204A se présente généralement sous la forme d'un cylindre et l'armature extérieure 204B sous la forme d'un anneau cylindrique. De ce fait, la couche 21 en élastomère se présente généralement sous la forme d'un anneau cylindrique.

La couche 21 en élastomère est délimitée par plusieurs surfaces $S_{ext}$, $S_I$, $S_E$.

La surface $S_{ext}$ est une surface extérieure qui est en l'occurrence scindée en deux parties, et définie par ses deux extrémités E1, E2 qui ne sont pas en contact avec l'un ou l'autre des éléments d'armature 204A, 204B. La surface extérieure $S_{ext}$ ne fait pas partie du volume interne $V_{int}$ de l'amortisseur 204. Elle forme le contour externe de la couche 21 en élastomère.

La surface $S_I$ de la couche 21 en élastomère forme une première surface appartenant au volume interne $V_{int}$ de l'amortisseur 204 et la surface $S_E$ forme une deuxième surface appartenant également au volume interne $V_{int}$ de l'amortisseur 204. Compte tenu de la forme de la couche 21 en élastomère, les surfaces $S_I$, $S_E$ présentent une forme identique, en l'occurrence cylindrique. La surface $S_I$ est au contact de l'armature intérieure 204A et la surface $S_E$ est au contact de l'armature extérieure 204B.

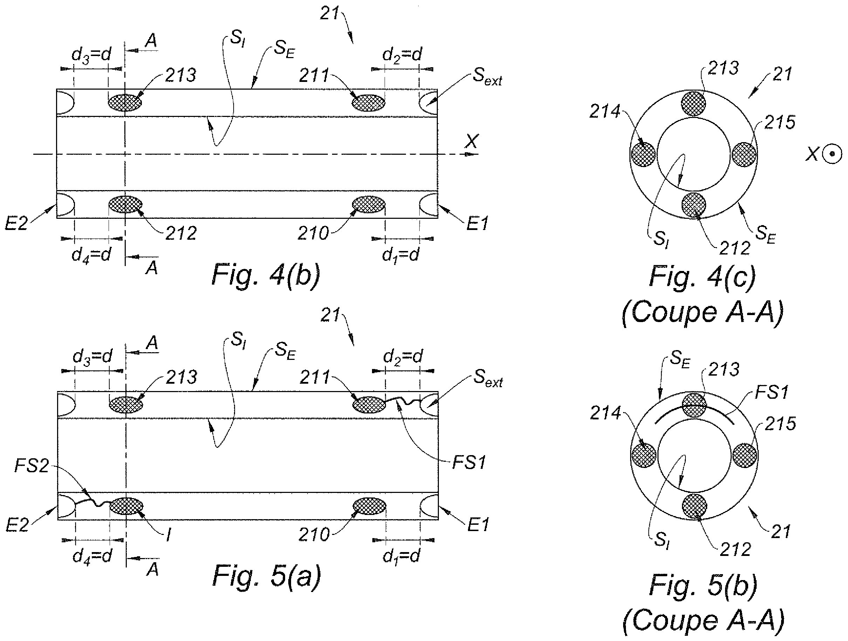

La couche 21 en élastomère comprend également une pluralités de poches 210, 211, 212, 213, 214, 215, 216 qui sont remplies par un produit, capable de s'écouler hors de la poche en présence d'une fissure. Dans le cas illustré sur les figures 4(a) à 4(c) et 5(a), 5(b), quatre poches sont prévues pour chaque extrémité E1, E2 de la couche 21 en élastomère. Ces poches sont situées, dans cet exemple, à 90° l'une par rapport à l'autre, comme cela est visible sur les figures 4(c) et 5(b).

Le produit remplissant chaque poche présentera avantageusement un composant, par exemple un additif, pour accentuer le contraste avec l'élastomère de la couche 21 en élastomère. Par exemple, il peut s'agir d'un colorant présentant une couleur, par exemple rouge, différente de la couleur de l'élastomère formant la couche 21 en élastomère, cette dernière étant généralement noire.

Chaque poche 210, 211, 212, 213, 214, 215, 216 est disposée, au sein du volume interne $V_{int}$ de l'amortisseur 204 et plus précisément de la couche 21 en élastomère, à une distance prédéterminée $d_1$, $d_2$, $d_3$, $d_4$ de la surface extérieure $S_{ext}$ de la couche 21 en élastomère. Cette surface extérieure ne faisant pas partie du volume interne de l'amortisseur, on comprend que cette distance $d_1$, $d_2$, $d_3$, $d_4$ est non nulle. Cette distance est définie le long de l'axe longitudinal (axe X) de la couche en élastomère. Dans le cas d'espèce, on a par ailleurs, $d = d_1 = d_2 = d_3 = d_4$.

Lors d'un mouvement relatif répété entre les pièces de l'aéronef à voilure tournante sur lesquelles les éléments d'armature 204A, 204B sont montés (cf. figure 3), une fissure se propage depuis la surface extérieure $S_{ext}$ de la couche 21 en élastomère (extrémité E1 et/ou extrémité E2), selon la direction longitudinale de cette couche 21, jusqu'à atteindre l'une des poches 210, 211, 212, 213, 214, 215, 216.

Cette situation est représentée sur les figures 5(a) et 5(b). La figure 5(b) correspond à la figure 4(b), une fois que des fissures FS ont atteint certaines poches 211, 212 comportant le produit capable de s'écouler hors de la poche en présence d'une fissure. La figure 5(b) correspond à la figure 4(c), une fois que des fissures FS ont atteint ces mêmes poches 211, 212 comportant ledit produit.

Une fois l'une de ces poches atteinte, le produit qu'elle contient passe par la fissure et se dirige vers l'extérieur de la couche 21 en élastomère. Le produit finit par sortir au niveau de la surface extérieure $S_{ext}$ et devient donc visible pour un technicien de maintenance.

Il est tout à fait envisageable de prévoir des distances $d_1$, $d_2$, $d_3$, $d_4$ différentes. En particulier, on peut envisager $d_1 = d_2$ (du côté de l'extrémité E1) et $d_3 = d_4$ (du côté de l'extrémité E2), avec par exemple $d_1 < d_3$. On peut ainsi disposer les poches 210, 211 à une distance plus faible de l'extrémité E1 de la surface extérieure $S_{ext}$ que la distance séparant les poches 212, 213 de l'extrémité E2 de la surface extérieure $S_{ext}$. Les poches 210, 211 servent alors d'avertisseur à un technicien de maintenance lui indiquant que l'amortisseur 204 a atteint un certain niveau d'endommagement par fatigue pour lequel l'amortisseur ne doit pas être changé, en utilisant par exemple un produit, capable de s'écouler hors de la poche en cas de fissure, d'une première couleur pour remplir ces poches 210, 211. Les autres poches 212, 213 permettent alors de définir un critère de changement de l'amortisseur 204, par exemple en utilisant un produit, capable de s'écouler hors de la poche en cas de fissure, dont la couleur est différente de la couleur du produit prévu dans les poches 210, 211.

L'existence de ces poches, remplies dudit produit, permet donc d'obtenir une information relative à l'état de fatigue du dispositif. De plus, le fait de prévoir plusieurs poches augmente les chances d'identifier la présence d'une fissure. Le fait que ces poches soient indépendantes limite par ailleurs l'altération des propriétés mécaniques de l'amortisseur, par rapport au dispositif proposé dans le document D1, toute choses égales par ailleurs, en particulier en ce qui concerne les dimensions du dispositif.

Afin de limiter encore plus l'altération des propriétés mécaniques de l'amortisseur en utilisation et maintenir une durée de vie conforme ou proche de celle d'un amortisseur classique, l'amortisseur 204 selon l'invention prévoit par ailleurs des poches dont les dimensions sont limitées.

Plus précisément, il convient de noter qu'en fonctionnement, un amortisseur classique travaille en cisaillement du fait du déplacement relatif entre les deux armatures 204A, 204B. La présence de poches 210-216 crée une discontinuité dans la transmission de la chaîne de cisaillement entre la surface $S_I$, l'épaisseur d'élastomère et la surface $S_E$ de la couche 21 en élastomère.

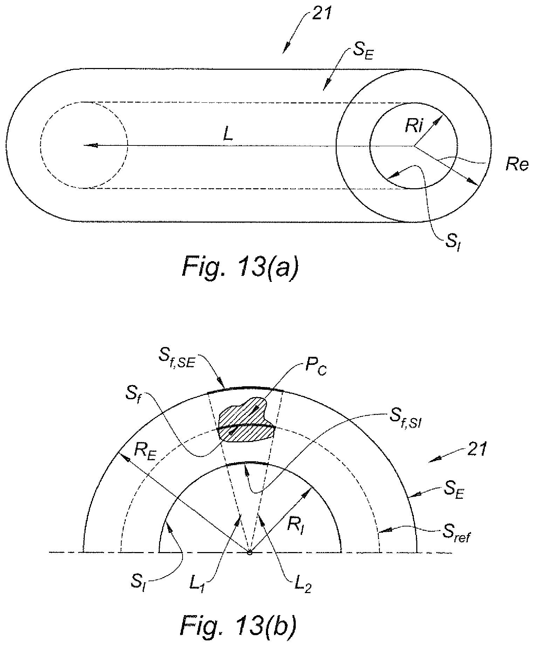

On a représenté sur les figures 13(a) et 13(b) des vues schématiques de la couche en élastomère, en vue longitudinale et en vue en coupe transversale partielle, respectivement.

Les propriétés mécaniques d'un amortisseur classique, à savoir sans poche ou chambre, à l'état neuf, peuvent être représentées par une rigidité dite de référence $K_{ref}$.

A cet amortisseur classique à l'état neuf, on peut également associer une surface de référence telle que :

$$S_{ref} = (S_I + S_E)/2 \qquad (R1)$$

où $S_I$ est défini par $S_I = 2\pi \cdot R_I \cdot L$ et $S_E = 2\pi \cdot R_E \cdot L$ avec L la longueur de la couche 21 en élastomère, $R_I$ son rayon interne et, $R_E$ son rayon externe.

La surface de référence $S_{ref}$ est représentée en pointillés sur la figure 13(b), celle-ci étant finalement basée sur un rayon moyen de la couche 21 en élastomère.

Lorsqu'une poche $P_C$ de forme quelconque, débouchante ou non, est prévue (cf. figure 13) dans la couche 21 en élastomère, toutes choses égales par ailleurs par rapport à l'amortisseur classique (longueur, épaisseur, nature du matériau formant la couche en élastomère) on peut définir l'abattement obtenu en termes de propriétés mécaniques, de la façon suivante :

$$\Delta K\ (\%) = 100\% \cdot (K_f - K_{ref})/K_{ref} \qquad (R2)$$

où $K_f$ représente la rigidité, à l'état neuf, de la couche 21 en élastomère comportant cette poche $P_C$.

On notera que $\Delta K\ (\%)$ est un pourcentage négatif.

La quantité $\Delta K$ peut également s'exprimer sous la forme :

$$\Delta K\ (\%) = 100\% \cdot S_f/S_{ref} \qquad (R3)$$

où $S_f$ représente la surface projetée, orthogonalement à la surface de référence (projection radiale ici), de la poche sur la surface de référence $S_{ref}$. En pratique, pour obtenir la surface $S_f$, on prend en considération chaque point de la poche qu'on projette orthogonalement sur la surface de référence.

La surface projetée $S_f$ obtenue est en l'occurrence définie par :

$$S_f = (S_{f,SI} + S_{f,SE})/2 \qquad (R4)$$

avec $S_{f,SI}$ la surface projetée de la poche P sur la surface $S_I$ de la couche 21 en élastomère et $S_{f,SE}$ la surface projetée de la poche P sur la surface $S_E$ de la couche 21 en élastomère.

On pourra se référer aux figures 13(a) et 13(b).

On note de la relation (R3) que si $S_f$ est nul (cas d'absence de poche), alors $\Delta K$ (%) est nul, ce qui signifie que la raideur n'est pas modifiée.

En particulier, on note sur ces figures la présence de deux lignes L1, L2 en pointillés qui permettent de définir la surface de la poche P, en termes d'angle solide. C'est cette surface de la poche qui est prise comme base pour la projection orthogonale sur la surface de référence $S_{ref}$ et ainsi obtenir $S_f$.

Dans le cadre de l'invention, N poches avec N $\geq$ 2 sont prévues.

Il suffit alors de remplacer $S_f$ (cas d'une seule poche) dans la relation (R3) par la surface projetée totale $S_{f,T}$ de l'ensemble des N poches sur la surface de référence $S_{ref}$. Chaque projection est réalisée orthogonalement à la surface de référence $S_{ref}$. La surface de référence est obtenue conformément à la relation (R4).

Plus précisément, on a alors :

$S_{f,T} = \Sigma \, S_{f,i}$ avec i variant de 1 à N

où $S_{f,i}$ est déterminé, pour chaque i compris entre 1 et N, conformément à la relation (R4).

En conséquence, pour N poches avec N $\geq$ 2, la relation (R3) devient :

$$\Delta K \, (\%) = 100\%.S_{f,T}/S_{ref} \qquad (R5)$$

Il convient de noter que, dans l'hypothèse où certaines poches présentent des surfaces projetées sur la surface de référence qui se recouvrent au moins en partie, la partie en commun n'est comptabilisée qu'une seule fois dans la relation (R5). La surface projetée d'une poche parmi les N poches doit donc définir une surface projetée distincte des autres surfaces projetées. Cela se justifie par le fait que, sur le plan mécanique, la rupture de continuité dans la chaîne de transmission des efforts d'une armature à l'autre (cisaillement ; transmission de proche en proche radialement) ne doit pas être prise en compte plusieurs fois.

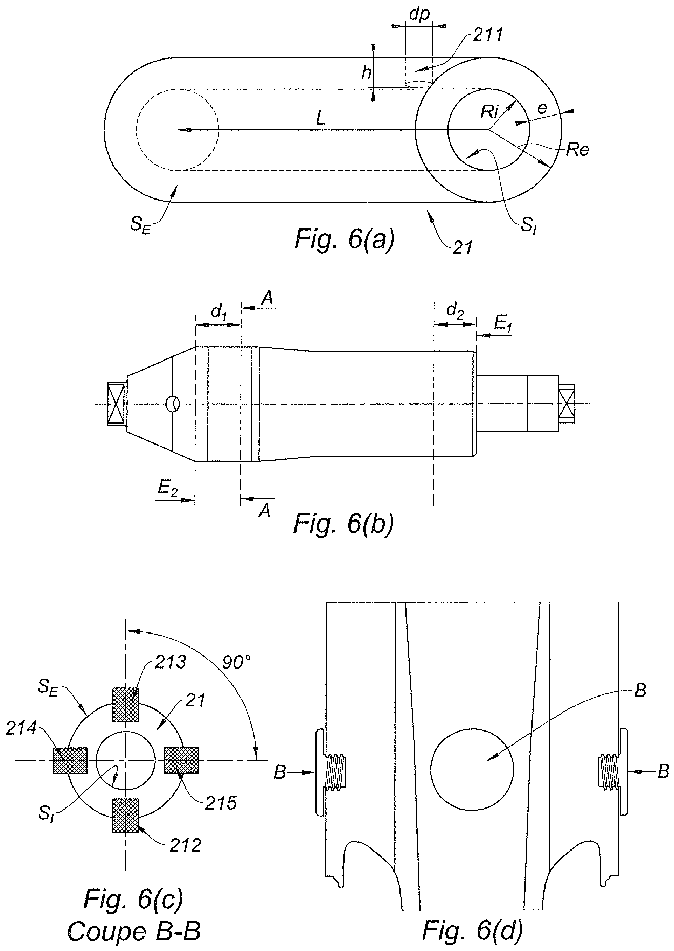

En pratique, les poches seront de toute façon avantageusement installées à des endroits différents sur la circonférence de la couche 21 en élastomère pour remplir leur fonction de détection de fissure de façon optimale (par exemple, sur la figure 6(c), les poches sont à 90° l'une par rapport à l'autre sur cette circonférence, si bien qu'il ne peut pas y avoir de recouvrement de la surface projetée, orthogonalement, des différentes poches sur la surface de référence).

Finalement, afin de limiter encore plus l'altération des propriétés mécaniques de l'amortisseur en utilisation et maintenir une durée de vie conforme ou proche de celle d'un amortisseur classique, il convient de prévoir que la surface $S_{f,T}$, de l'ensemble des poches, projetée orthogonalement sur la surface de référence $S_{ref}$ de la couche 21 en élastomère représente au plus 5% de la surface de référence $S_{ref}$, au plus 4% de la surface de référence $S_{ref}$, au plus 3% de la surface de référence $S_{ref}$, ou au plus 2% de la surface de référence $S_{ref}$ ou encore au plus 1% de la surface de référence $S_{ref}$.

Sur la relation (R5), cela signifie que la quantité $\Delta K$ (%) est, en valeur absolue et respectivement, au plus de 5%, au plus de 4%, au plus de 3% ou au plus de 2% ou encore au plus de 1%.

Comme on peut l'observer par la relation (R1), la surface de référence prise en considération est une surface moyenne entre la surface $S_I$ et la surface $S_E$ de la couche 21 en élastomère.

Cette surface de référence pourrait être définie autrement.

Par exemple, on pourrait tout à fait considérer la surface radialement interne $S_I$ de la couche 21 en élastomère en tant que surface de référence $S_{ref}$ ($S_{ref} = S_I$ ; relation (R1) modifiée). Dans ce cas, la surface projetée $S_f$ de la poche P sur cette surface de référence serait $S_{f,SI}$ ($S_f = S_{f,SI}$ ; relation (R4) modifiée en conséquence). Selon un autre exemple, on pourrait tout à fait considérer la surface radialement externe $S_E$ de la couche 21 en élastomère en tant que surface de référence $S_{ref}$ ($S_{ref} = S_E$ ; relation (R1) modifiée). Dans ce cas, la surface projetée $S_f$ de la poche P sur cette surface de référence serait $S_{f,SI}$ ($S_f = S_{f,SI}$ ; relation (R4) modifiée en conséquence). Cela ne changerait rien au résultat obtenu sur l'abattement des propriétés mécaniques défini par la relation (R3) pour une poche, ni à la généralisation pour plusieurs poches de la relation (R5).

Quelle que soit la définition choisie pour la surface de référence $S_{ref}$, celle-ci doit cependant être une surface qui participe à la transmission des efforts entre les deux armatures. Cette surface de référence présente donc, dans le cas de l'amortisseur 204, une forme cylindrique (on notera en particulier que la surface de référence ne peut pas être la surface externe $S_{ext}$ définie par les extrémités de la couche 21 en élastomère).

Aussi, la surface de référence pourra être plus généralement définie comme une surface présentant une forme identique à l'une et/ou l'autre des première $S_I$ et deuxième $S_E$ surfaces délimitant la couche 21 en élastomère et qui sont dans le volume interne $V_{int}$ du dispositif, en l'occurrence un amortisseur 204.

La fabrication d'un amortisseur conforme à l'invention est particulièrement aisée pour l'homme du métier.

On peut partir d'un amortisseur classique, à partir duquel on réalise les poches par perçage à travers l'armature extérieure et la couche 21 en élastomère. Il convient ensuite de remplir les poches avec un produit capable de s'écouler hors de la poche en cas de fissure et de prévoir un bouchon pour fermer chaque poche.

En variante, il est possible de réaliser les poches en même temps qu'on réalise la couche 21 en élastomère. La couche 21 en élastomère est alors insérée entre les deux armatures 204A, 204B conformément à la pratique courante. Aucun perçage n'est alors réalisé dans l'armature extérieure.

Exemple de réalisation et test associé.

Un amortisseur conforme à l'invention a été testé.

On a précisé sur la figure 6 quelques dimensions indicatives pour cet amortisseur.

La longueur L (axe X) de la couche 21 en élastomère est de L = 180mm.

L'épaisseur e (radial) de la couche 21 en élastomère est de e $\cong$ 16mm (rayon intérieur Ri = 23mm ; rayon extérieur Re = 39mm).

La couche 21 en élastomère est réalisée en caoutchouc naturel.

Quatre poches ont été réalisées, au niveau de chaque extrémité E1, E2 de la couche 21 en élastomère, soit un total de huit poches, indépendantes les unes des autres.

La surface projetée $S_{f,T}$, de l'ensemble des poches, orthogonalement sur la surface de référence, par exemple définie selon la relation (R1), est d'environ 2%.

Pour une extrémité E1, E2 donnée, les quatre poches concernées ont été placées à 90° les unes par rapport aux autres. Par ailleurs, au niveau de l'extrémité E1, chaque poche se situe à une distance de 3,5cm de cette extrémité, définissant la surface extérieure $S_{ext}$. Et au niveau de l'extrémité E2, chaque poche se situe à une distance de 4,5cm de l'extrémité E2, formant la surface extérieure $S_{ext}$.

En outre, chaque poche présente une forme cylindrique de diamètre $d_p$ = 10mm et de hauteur h = 14,5mm.

Pour réaliser cet amortisseur, on part d'un amortisseur classique dans lequel on réalise ces poches. A cet effet, un perçage à travers l'armature extérieure et la couche 21 en élastomère a été réalisé pour réaliser chaque poche, conformément aux dimensions fournies précédemment.

Chaque poche a été remplie d'un gel silicone comportant un colorant (couleur rouge en l'occurrence), présentant un contraste important par rapport à la couleur de la couche 21 en élastomère, laquelle est noire. Le gel silicone peut sortir de la poche par une fissure lorsque celle-ci est présente.

Puis, chaque poche a été fermée par un bouchon étanche.

Les figures 6(a) à 6(d) représentent l'amortisseur testé. Sur la figure 6(a), on a schématisé la couche 21 en élastomère, en y représentant qu'une seule poche. Sur la figure 6(b), on a schématisé l'amortisseur avec ses armatures 204A, 204B pour visualiser le lieu d'implantation, par rapport aux extrémités E1, E2 de la couche 21 en élastomère, des poches. Sur la figure 6(c), on a représenté une vue selon la coupe A-A de la figure 6(b) avec ses différentes poches. Sur la figure 6(d), on a représenté une vue observable de l'amortisseur de la figure 6(b), une fois les bouchons B montés sur les poches.

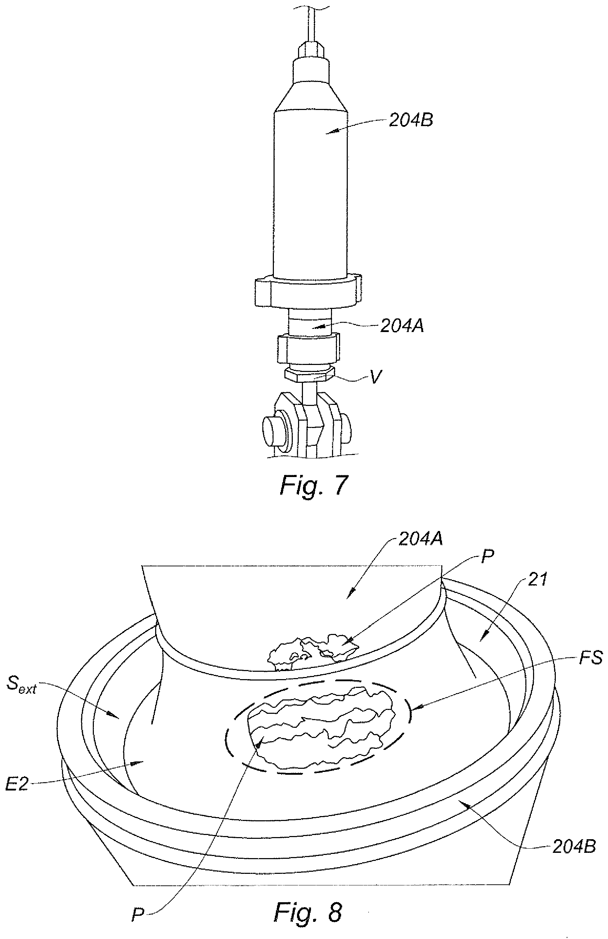

La figure 7 est un schéma montrant l'amortisseur 204 testé avec les moyens mis en oeuvre pour réaliser le test de fatigue. Sur cette figure 7, on remarque l'amortisseur 204, l'une 204B (armature extérieure) des armatures et la couche en élastomère. L'armature 204B est immobile et repose à cet effet sur un socle S. Un vérin V est prévu pour déplacer l'autre armature (armature interne ; non référencée sur la figure 7 car non visible) à une fréquence donnée. Le déplacement de l'armature interne 204A par rapport à l'armature externe 204B permet de faire travailler la couche 21 en élastomère reliant les deux armatures 204A, 204B.

Les conditions plus précises du test de fatigue sont rassemblées dans le tableau 1.

Tableau 1

| conditions | Fréquence (Hz) | cycle | Déplacement dynamique sur un cycle (mm) | |
|---|---|---|---|---|
| 1 | 0,1 | 7 | $0 \rightarrow +11 \rightarrow 0$ | |
| conditions | Fréquence (Hz) | cycle | Déplacement statique (mm) | Déplacement dynamique (mm) |
| 2 | 5 | 1000 | 3 | 3 |

(suite)

| conditions | Fréquence (Hz) | cycle | Déplacement statique (mm) | Déplacement dynamique (mm) |
|---|---|---|---|---|
| 3 | 5 | 80 | -5 | 10 |
| 4 | 5 | 10000 | -5 | 3 |

Pour réaliser le test, les conditions 1 à 4 s'enchaînent. Une fois la condition 4 terminée, on revient à la condition 1 et ainsi de suite.

La condition 1 correspond à une condition avant vol d'un aéronef à voilure tournante sur le rotor principal.

Pour la condition 1, la fréquence de déplacement entre les deux armatures 204A, 204B, mises en oeuvre grâce au vérin V est de 0,1 Hz et 7 cycles sont réalisés. Dans la condition 1, pour réaliser un cycle, on part de la position naturelle de l'amortisseur (déplacement = 0mm), on déplace l'armature centrale de 11mm puis on revient à la position naturelle.

Les conditions 2 à 4 sont représentatives de conditions de vol.

Les fréquences appliquées et le nombre de cycles sont aisément lisibles dans le tableau 1.

Cependant, par rapport à la condition 1, il convient de lire le déplacement comme suit. Par exemple, pour la condition 2, on réalise un déplacement statique de 3mm entre les deux armatures, toujours par rapport à la position naturelle (déplacement = 0mm) puis, on réalise un déplacement dynamique de 3mm autour de la position définie par le déplacement statique. Cela revient, au cours d'un cycle à obtenir deux limites de déplacement de 6mm (= 3mm +3mm) et de 0mm (= 3mm -3mm). Pour les conditions 3 et 4 qui suivent la condition 2, le principe de lecture du tableau 1 est le même.

Cet essai de fatigue est représentatif d'un des modes de chargement et d'endommagement fréquemment rencontré pour ce type d'amortisseur, mais dont les sollicitations sont plus importantes que dans une situation réelle (conditions sévérisées), afin d'accélérer le phénomène d'endommagement par fatigue. Pour autant, il s'agit d'un test en fatigue tout à fait représentatif des conditions susceptibles d'être rencontrées pour un amortisseur séparant un moyeu et une pale de rotor d'hélicoptère.

Le critère pris en considération pour que l'amortisseur soit considérée comme devant être changé est basé sur une perte de 10% de la rigidité axiale de l'amortisseur, en référence à la rigidité de cet amortisseur avant le début du test (état neuf).

Sous l'effet du mouvement relatif répété entre les deux parties P1, P2 (chacune d'entre elles étant destiné à être montée sur une pièce permettant, sur un hélicoptère de générer ce mouvement relatif répété), une fissure se propage depuis la surface extérieure $S_{ext}$ vers le volume interne de l'amortisseur et plus précisément de la couche en élastomère. Lorsqu'une poche est atteinte, le gel silicone sort du volume interne et devient visible à l'extérieur, au niveau de la surface extérieure $S_{ext}$.

On a représenté sur la figure 8, ce qui a pu être observé à l'issu du test.

Sur cette figure 8, on observe les éléments d'armature 204A, 204B, la couche 21 en élastomère au niveau de sa surface extérieure $S_{ext}$ et plus précisément du côté de l'extrémité E2. On observe également la fissure FS ayant débouchée au niveau de la surface extérieure $S_{ext}$ ainsi que du gel silicone, coloré, P.

Une telle situation indique que l'amortisseur doit être changé. Fin de l'exemple.

L'application à un amortisseur 204, en l'occurrence non lamifié, n'est qu'un exemple.

En effet, l'invention peut également s'appliquer à des structures lamifiées et plus généralement à différents types de dispositifs destinés à être installés entre deux pièces susceptibles de subir un mouvement relatif répété au sein d'un aéronef à voilure tournante.

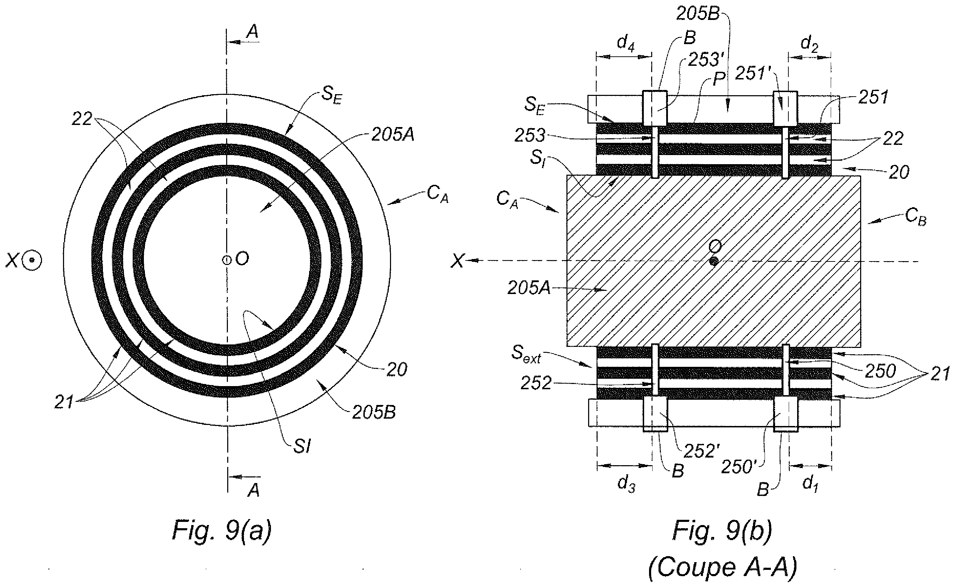

La figure 9 représente par exemple une articulation lamifiée, de forme cylindrique, conforme à l'invention. La figure 9(a) est une vue de côté de l'articulation lamifiée et la figure 9(b) une vue en coupe de cette articulation.

Cette articulation 205 comprend un premier élément d'armature 205A, se présentant généralement sous la forme d'un cylindre et, un deuxième élément d'armature 205B, se présentant généralement sous la forme d'un anneau. Le lamifié est un empilement 20 formé de couches 21 en élastomère alternées avec des coupelles 22 réalisées en un matériau plus rigide que l'élastomère, chaque coupelle 22 étant par exemple réalisée en métal, avec un alliage métallique ou encore un matériau composite. Ce lamifié est disposé entre les deux armatures 207A, 207B, chaque couche 21 ou coupelle 22 présentant une forme cylindrique.

L'articulation 205 comprend également plusieurs poches 250, 251, 252, 253 indépendantes toutes situées à une distance $d_1$, $d_2$, $d_3$, $d_4$ prédéterminée de la surface extérieure $S_{ext}$ du lamifié 20. Ici, la surface extérieure est scindée en deux parties, chacune de ces parties étant définie d'un côté CA ou CB de l'articulation.

En l'occurrence, il est prévu quatre poches indépendantes, deux 250, 251 qui sont situées à une distance $d_1$, $d_2$ de la surface extérieure $S_{ext}$, du côté CB, et deux autres 252, 253 qui sont situées à une distance d3, d4 de la surface

extérieure $S_{ext}$, du côté CA (ces distances sont prises selon l'axe longitudinal OX). Par ailleurs, les poches peuvent être diamétralement opposées, deux à deux, comme cela est représenté sur la figure 9(b).

Avantageusement, on aura d = $d_1$ = $d_2$ = $d_3$ = $d_4$, comme cela est le cas sur la figure 9(b). La distance d est alors adaptée pour que lorsqu'une fissure atteint, en utilisation, la profondeur d, cela corresponde à un critère de changement de l'articulation lamifiée 205.

Chaque poche 250, 251, 252, 253 pourra contenir un produit capable de s'écouler hors de la poche en présence d'une fissure, ce produit étant avantageusement coloré comme expliqué précédemment pour l'amortisseur 204.

Chaque poche 250, 251, 252, 253 peut déboucher sur un orifice 250', 251', 252', 253' formé dans l'armature extérieure 205B. Chaque orifice comporte un bouchon B amovible qui permet d'avoir accès à chaque poche 250, 251, 252, 253 pour la remplir avec ledit produit. Lorsque le bouchon B est refermé, l'articulation 205 peut être utilisée normalement.

Par ailleurs, chaque poche 250, 251, 252, 253 s'étend avantageusement d'une armature 205B à l'autre 205A, à savoir radialement ici, et comme représenté sur la figure 9(b). Toutefois, il est possible que l'une au moins de ces poches 250, 251, 252, 253 ne s'étende pas d'une armature à l'autre, mais s'étende depuis l'armature extérieure 205B en direction de l'armature centrale 205A, sans atteindre cette armature centrale 205A.

Il convient de noter que la structure représentée sur les figures 9(a) et 9(b) pourrait également être celle d'un amortisseur 204 conforme à l'invention, présentant un lamifié entre les deux éléments d'armature.

La surface de référence peut être définie de différentes façons. Une possibilité est de prendre en compte la relation (R1) avec $S_I$ la surface de la couche en élastomère qui est en contact avec l'armature centrale 205A et $S_E$ la surface de l'élastomère qui est en contact avec l'armature extérieure 205B. Une autre possibilité pour définir la surface de référence est de prendre en compte la relation (R1) avec SI la surface de la couche 21 en élastomère qui est en contact avec une coupelle 22 attenante à ladite couche 21 considérée et SE la surface de la couche 21 en élastomère qui est en contact avec l'autre coupelle 22 attenante à ladite couche 21 considérée.

La forme cylindrique n'est pas essentielle, et l'articulation lamifiée 205 pourrait également présenter une forme conique, la conicité étant réalisée le long de l'axe OX.

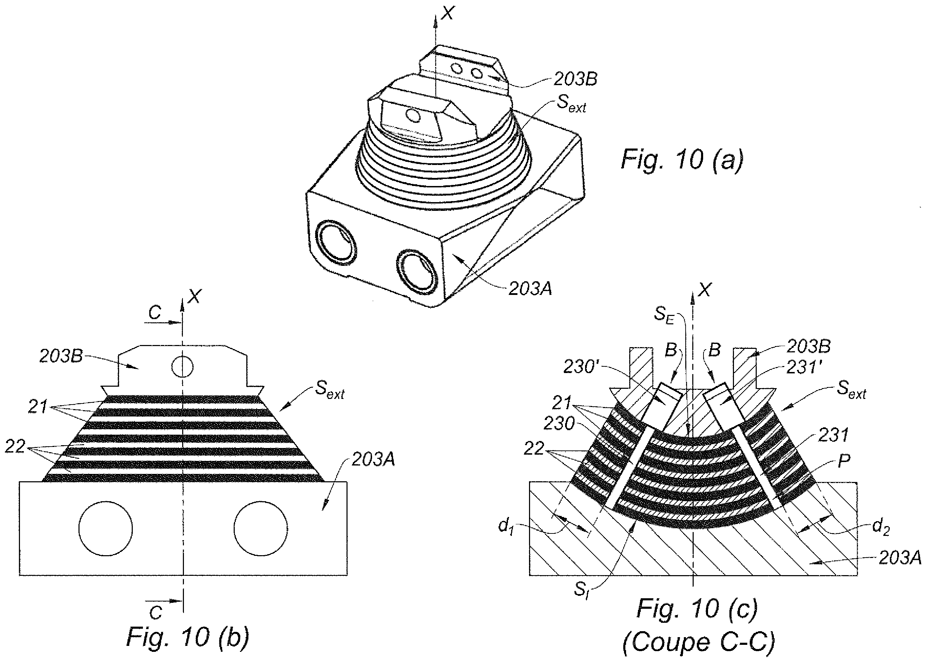

La figure 10 représente une butée lamifiée, en l'occurrence sphérique, conforme à l'invention. Il s'agit d'une butée lamifiée 203 typiquement utilisée dans le rotor principal 200 de l'hélicoptère qui est représenté sur la figure 1. La figure 10(a) est une vue générale de la butée lamifiée 203, en perspective. La figure 10(b) est une vue de côté de la butée lamifiée de la figure 10(a) et la figure 10(c) est une en coupe de la butée lamifiée représentée sur la figure 10(b).

Cette butée lamifiée 203 comprend deux éléments d'armature 203A, 203B destinés à être chacun monté sur l'une des pièces 201, 202, du rotor 200, comme cela est représenté sur la figure 1.

Cette butée lamifiée 203 comprend également un empilement 20 disposée entre les deux éléments d'armature 203A, 203B, cet empilement étant formé d'une pluralité de couches 21 en élastomère séparées entre elles par une pluralité de coupelles 22 réalisées en un matériau non élastomère plus rigide que l'élastomère formant lesdites couches en élastomère. Chaque coupelle 22 de la pluralité de coupelles 22 peut être réalisée en métal, avec un alliage métallique ou encore un matériau composite.

La butée lamifiée 203 comprend également plusieurs poches 230, 231 indépendantes toutes situées à une distance $d_1$, $d_2$ prédéterminée de la surface extérieure $S_{ext}$ du lamifié 20.

En l'occurrence, il est prévu deux poches indépendantes 230, 231. Par ailleurs, les poches seront avantageusement diamétralement opposées, comme cela est représenté sur la figure 10(c).

Avantageusement, on aura d = $d_1$ = $d_2$, comme cela est le cas sur la figure 10(c). La distance d est alors adaptée pour que lorsqu'une fissure atteint, en utilisation, la profondeur d, cela corresponde à un critère de changement de la butée lamifiée 203. On notera que, compte tenu de la forme sphérique de la butée lamifiée 203, les distances d, $d_1$, $d_2$ sont des distances curvilignes, qui suivent la conformation d'une couche 21 en élastomère.

Chaque poche 230, 231 pourra contenir un produit, capable de s'écouler hors de la poche en cas de fissure, avantageusement coloré comme expliqué précédemment pour l'amortisseur 204.

Chaque poche 230, 231 débouche avantageusement sur un orifice 230', 231' formé dans l'armature extérieure 203B. Chaque orifice 230', 231' comporte un bouchon B amovible qui permet d'avoir accès à chaque poche 230, 231 pour la remplir avec ledit produit. Lorsque le bouchon B est refermé, la butée lamifiée 203 peut être utilisée normalement.

Par ailleurs, chaque poche 230, 231 s'étend avantageusement d'une armature 203B à l'autre 203A, à savoir ici sensiblement perpendiculaire aux lignes formées par les couches 21 et les coupelles 22. Toutefois, il est possible que l'une au moins de ces poches 230, 231 ne s'étende pas d'une armature à l'autre, mais s'étende depuis l'une 203B des armatures, i.e. du côté où la poche 230, 231 débouche sur un orifice 230', 231', en direction de l'autre armature 203A, sans atteindre cette autre armature 203A.

On pourra cependant prévoir que les distances $d_1$ et $d_2$ diffèrent, pour que, comme expliqué précédemment, on puisse obtenir un critère d'avertissement à un technicien de maintenance, lui indiquant que la butée lamifiée 203 ne doit pas encore être changée mais a subi un certain niveau d'endommagement par fatigue et un critère de changement de la butée lamifiée 203.

La surface de référence peut être définie de différentes façons. Une possibilité est de prendre en compte la relation (R1) avec $S_I$ la surface de la couche en élastomère qui est en contact avec l'armature 203A et $S_E$ la surface de l'élastomère qui est en contact avec l'armature extérieure 203B. Une autre possibilité, décrite précédemment, est envisageable en définissant la surface de référence, selon la relation (R1), par rapport aux coupelles attenantes à la couche 21 en élastomère considérée.

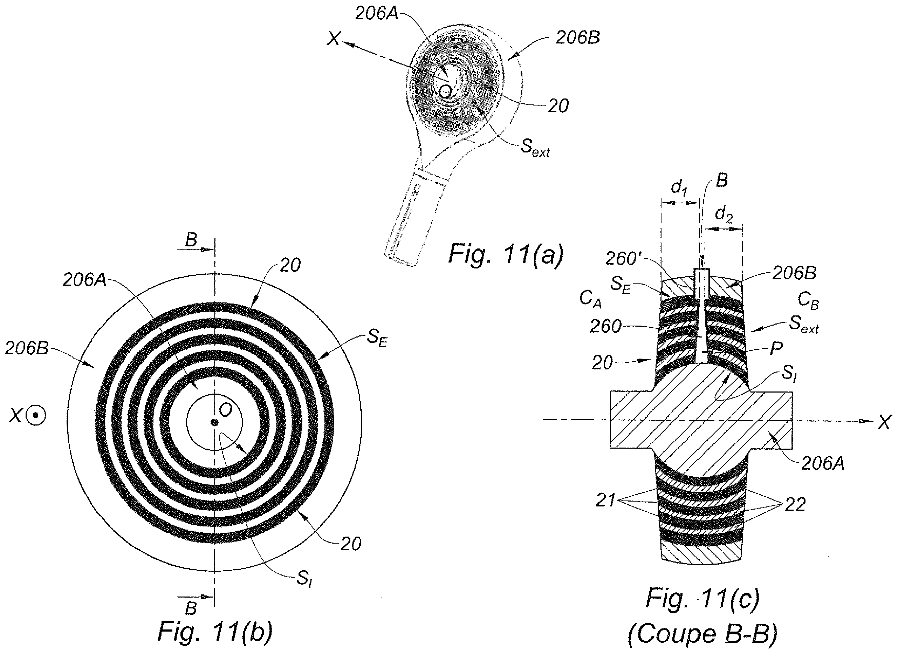

Sur la figure 11, on a représenté une rotule lamifiée 206 conforme à l'invention. Plus précisément, la figure 11(a) est une vue générale en perspective de cette rotule lamifiée, la figure 11(b) une vue de face partielle et la figure 11(c) une vue en coupe de la représentation de la figure 11(b).

Cette rotule lamifiée 206 présente un premier élément d'armature 206A et un deuxième élément d'armature 206B entre lesquelles un lamifié de type sphérique est disposé. Le lamifié ou empilement 20 est en l'occurrence formé de couches 21 en élastomère alternées avec des coupelles 22 réalisées en un matériau plus rigide que l'élastomère.

La rotule lamifiée 206 comprend également plusieurs poches 260 indépendantes (une seule est représentée sur la figure 11(c) au-dessus de l'axe X, mais il faut voir qu'au moins une autre poche sera prévue au-dessous de l'axe X), chacune située à une distance $d_1$, $d_2$ prédéterminée de la surface extérieure $S_{ext}$ du lamifié 20 ($d_1$ est pris du côté $C_A$ et $d_2$ du côté $C_B$ de la surface extérieure $S_{ext}$).

Avantageusement, on aura $d = d_1 = d_2$, comme cela est le cas sur la figure 11(c). La distance d est alors adaptée pour que lorsqu'une fissure atteint, en utilisation, la profondeur d, cela corresponde à un critère de changement de la rotule lamifiée 206. On notera que, compte tenu de la forme de la rotule lamifiée 206, les distances d, $d_1$, $d_2$ sont des distances curvilignes, qui suivent la conformation d'une couche 21 en élastomère.

Par ailleurs, la poche 260 qui est représentée présente une forme évasée en s'élargissant depuis l'armature extérieure 206B en direction de l'armature centrale 206A, pour s'assurer que, quelle que soit la couche 21 en élastomère considérée, on a bien une même distance d entre la poche 260 et le côté considéré $C_A$, $C_B$ de la surface extérieure $S_{ext}$.

On pourrait faire autrement en prévoyant, sur la partie située au-dessus de l'axe X, non pas une poche 260 évasée mais deux poches non évasées qui sont chacune à une distance $d_1$, $d_2$ du côté $C_A$, $C_B$ respectif de la surface extérieure $S_{ext}$, avec avantageusement $d = d_1 = d_2$. Deux autres poches, identiques aux deux poches non évasées décrites ci-dessus peuvent alors être prévues au dessous de l'axe X ou, en variante une seule poche évasée telle que décrite précédemment.

Chaque poche 260 pourra contenir un produit, capable de s'écouler hors de la poche en cas de fissure, ce produit étant avantageusement coloré comme expliqué précédemment pour l'amortisseur 204.

Chaque poche 260 débouche avantageusement sur un orifice 260' formé dans l'armature extérieure 206B. Chaque orifice 260' comporte un bouchon B amovible qui permet d'avoir accès à chaque poche 260 pour la remplir avec ledit produit. Lorsque le bouchon B est refermé, la rotule lamifiée 206 peut être utilisée normalement.

Par ailleurs, chaque poche 260 s'étend avantageusement d'une armature 206B à l'autre 206A, à savoir ici radialement. Toutefois, il est possible que l'une au moins de ces poches 260 ne s'étende pas d'une armature à l'autre, mais s'étende depuis l'armature extérieure 206B, i.e. du côté où la poche 260 débouche sur un orifice 260', en direction de l'armature centrale 206A, sans atteindre cette armature centrale 206A.

On pourra prévoir que les distances $d_1$ et $d_2$ diffèrent, pour que, comme expliqué précédemment, on puisse obtenir un critère d'avertissement à un technicien de maintenance, lui indiquant que la rotule lamifiée 206 ne doit pas encore être changée mais a subi un certain niveau d'endommagement par fatigue et un critère de changement de la rotule lamifiée 206.

La surface de référence peut être définie de différentes façons. Une possibilité est de prendre en compte la relation (R1) avec $S_I$ la surface de la couche en élastomère qui est en contact avec l'armature intérieure 206A et $S_E$ la surface de l'élastomère qui est en contact avec l'armature extérieure 206B. Une autre possibilité, décrite précédemment, est envisageable en définissant la surface de référence selon la relation (R1) par rapport aux coupelles attenantes à la couche 21 en élastomère considérée.

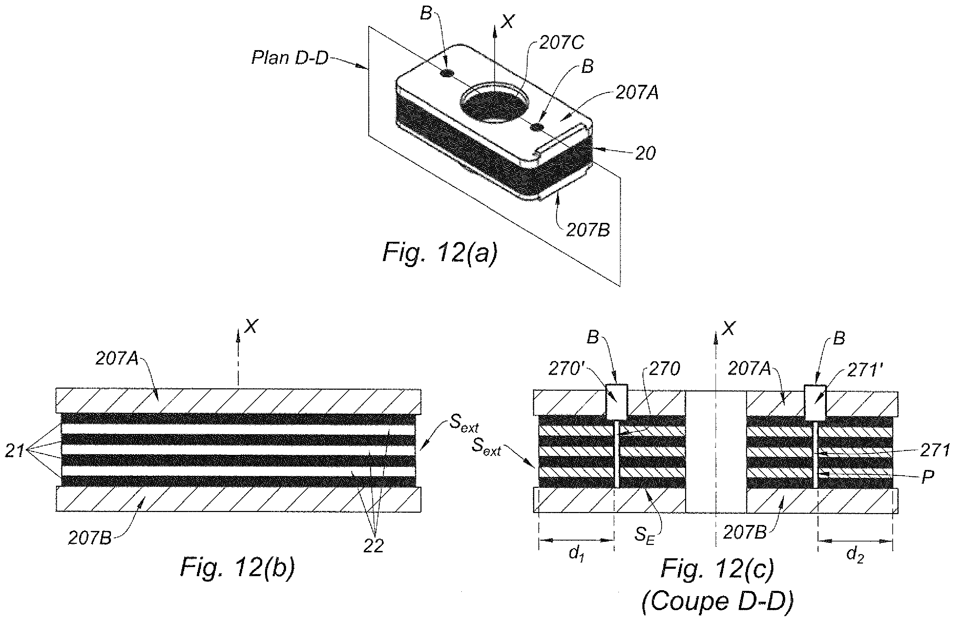

La figure 12, qui comporte les figures 12(a) à 12(c), représente un palier lamifié conforme à l'invention selon différentes vues. La figure 12(a) est une vue générale de cette butée, en perspective. La figure 12(b) est une vue de côté et la figure 12(c) une vue en coupe, selon le plan de coupe D-D de la figure 12(a).

Le palier lamifié 207 comprend un premier élément d'armature 207A et un deuxième élément d'armature 207B ainsi qu'un lamifié ou empilement 20 disposé entre les deux éléments d'armature 205A, 205B. Le lamifié est formé de couches 21 en élastomère alternées avec des coupelles 22 réalisées en un matériau plus rigide que l'élastomère. Un orifice central 207C est généralement prévu pour réaliser la liaison avec les pièces de l'aéronef qui sont amenées à subir un mouvement relatif répété (non représentées).

Les couches 21 et coupelles 22 sont planes.

Le palier lamifié 207 comprend également plusieurs poches 270, 271 indépendantes, chacune située à une distance $d_1$, $d_2$ prédéterminée de la surface extérieure $S_{ext}$ du lamifié 20.

En l'occurrence, il est prévu deux poches indépendantes 270, 271. Par ailleurs, les poches seront avantageusement diamétralement opposées, comme cela est représenté sur la figure 12(c).

Avantageusement, on aura d = $d_1$ = $d_2$, comme cela est le cas sur la figure 12(c). La distance d est alors adaptée pour que lorsqu'une fissure atteint, en utilisation, la profondeur d, cela corresponde à un critère de changement du palier lamifié 207. On notera que, compte tenu de la forme rectangulaire du palier lamifiée 207, les distances d, $d_1$, $d_2$ sont des distances prises perpendiculairement à la surface extérieure $S_{ext}$, en suivant le plan formé par une couche 21 en élastomère.

Chaque poche 270, 271 pourra contenir un produit, capable de s'écouler hors de la poche en cas de fissure, ce produit étant avantageusement coloré comme expliqué précédemment pour l'amortisseur 204.

Chaque poche 270, 271 débouche avantageusement sur un orifice 270', 271' formé dans l'une des armatures 207A, 207B. Chaque orifice 270', 271' est muni d'un bouchon B amovible qui permet d'avoir accès à chaque poche 270, 271 pour la remplir avec ledit produit. Lorsque le bouchon B est refermé, le palier lamifié 207 peut être utilisée normalement.

Par ailleurs, chaque poche 270, 271 s'étend avantageusement d'une armature 207B à l'autre 207A, à savoir ici selon l'axe longitudinal OX. Toutefois, il est possible que l'une au moins de ces poches 270, 271 ne s'étende pas d'une armature à l'autre, mais s'étende depuis l'armature 207A, i.e. du côté où la poche 270, 271 débouche sur un orifice 270', 271', en direction de l'autre armature 207B, sans atteindre cette autre armature 207B.

Là également, on pourra prévoir que les distances d1 et d2 diffèrent, pour pouvoir obtenir un critère d'avertissement à un technicien de maintenance, lui indiquant que le palier lamifié 207 ne doit pas encore être changé mais a subi un certain niveau d'endommagement par fatigue et un critère de changement du palier lamifié 207.

Sur les figures annexées, la forme générale du palier lamifié 207 est rectangulaire.

Il est cependant envisageable de prévoir une autre forme, par exemple circulaire. Le lamifié reste alors formé de couches 21 en élastomère alternées avec des coupelles 22 réalisées en un matériau plus rigide que l'élastomère qui sont planes, mais avec une forme circulaire.

Dans les deux cas de la forme rectangulaire ou circulaire, la surface de référence peut être définie de différentes façons. Une possibilité est de prendre en compte la relation (R1) avec $S_I$ la surface de la couche en élastomère qui est en contact avec l'armature 203A et $S_E$ la surface de l'élastomère qui est en contact avec l'armature extérieure 203B. Compte tenu de la forme plane du lamifié, d'autres surfaces de référence pouvant être choisies, par exemple $S_I$ ou $S_E$ donneront une valeur identique de la surface de référence.

Pour l'ensemble des modes de réalisation décrits précédemment, différents produits sont utilisables pour remplir les poches. Le points importants sont que ce produit puisse s'écouler hors de la poche pour passer par une fissure et sortir à l'extérieur et d'autre part puisse être distingué de l'élastomère formant une couche 21 en élastomère.

Ainsi, on peut prévoir que le produit remplissant l'une au moins ou chaque poche soit choisi parmi :

- un liquide ;
- un gaz sous pression (par « sous pression », il convient de comprendre un gaz à une pression supérieure à la pression atmosphérique dans les conditions normales de température et de pression ; CNTP) ;
- une pâte, par exemple une pâte à modeler ;
- un gel, par exemple un gel silicone ;
- des miettes d'élastomère, par exemple non vulcanisées, aptes à être distinguées visuellement de l'élastomère formant une couche 21 en élastomère.

Quel que soit le produit considéré, celui-ci pourra présenter une couleur différente de l'élastomère de la couche 21 en élastomère. Cela peut être réalisé en prévoyant un additif adéquat au sein du produit. A titre d'exemple, on peut envisager un additif (pigment) de type isoindoline (conférant une couleur jaune) ou de type Cu-phtalocyanine beta (conférant une couleur bleue).

En variante ou en complément, le produit pourra présenter des propriétés de luminescence qu'une couche 21 en élastomère ne possède pas. Par exemple, si le produit considéré est incolore dans le domaine visible, des propriétés de luminescence peuvent être obtenues par l'ajout d'un additif. Cet additif peut être un azurant optique, qui selon sa nature, peut conférer à la couche en élastomère translucide des propriétés fluorescentes ou phosphorescentes. Un exemple d'azurant optique susceptible de convenir est le benzoxazole, par exemple proposé sous la dénomination COMAX® OA par la société COMA Additive GmbH, en particulier lorsque le produit considéré est un liquide, une pâte, un gel ou de l'élastomère. Cet azurant optique réagit à la lumière ultraviolette.

Dans le cas particulier où une poche est remplie de miettes d'élastomère (produit), il convient de pouvoir distinguer visuellement celles-ci de l'élastomère formant la couche 21 en élastomère.

La coloration ou des propriétés de luminescence pour ces miettes d'élastomère peuvent permettre de faire cette distinction.

Ce n'est pas le seul choix possible.

En effet, on peut prévoir, de façon alternative ou en complément, que les miettes d'élastomère remplissant une poche soient calibrées, par exemple en forme de sphère ou de parallélépipède. Les miettes d'élastomère calibrées peuvent être distinguées visuellement, par leur géométrie spécifique, des miettes susceptibles de provenir de la formation de la fissure dans la couche 21 en élastomère, lesquelles présentent des dimensions et des formes variables. Dans ce cas, il est tout à fait envisageable d'utiliser, pour remplir une poche, un élastomère de composition chimique identique à celle de l'élastomère formant une couche 21 en élastomère.

Enfin, il convient de noter que lorsque des miettes d'élastomère sont utilisée pour remplir la poche, leurs dimensions devront être adaptées pour assurer leur écoulement hors de la poche. Ceci dépend des caractéristiques de la fissure, lesquelles sont liées au type de dispositif concerné compte tenu de son application. Ces données sont connues de l'homme du métier.

Par ailleurs, lorsque la poche concernée est remplie par un liquide ou un gaz sous pression, un capteur de pression mesurant la pression dans la poche peut être envisagé. Lorsqu'un capteur de pression est prévu, on peut envisager d'implanter, dans une couche 21 en élastomère une communication fluidique entre la poche concernée et la surface extérieure $S_{ext}$ du dispositif considéré ; le capteur proprement dit, muni d'un moyen de lecture de la pression, étant installé sur cette surface extérieure.

Pour les dispositifs lamifiés, les différentes figures annexées montrent des poches qui traversent les couches 21 en élastomère et les coupelles 22.

En variante, on pourrait prévoir que les poches soient situées seulement dans les couches 21 en élastomère. Par exemple, on peut envisager au moins une poche par couche 21 en élastomère. On peut également envisager que les poches soient situées dans la même couche 21 en élastomère ou encore prévoir plusieurs poches par couche 21 en élastomère.

Quel que soit le mode de réalisation envisagé, une couche 21 en élastomère sera avantageusement vulcanisée. Dans certains cas, une couche 21 en élastomère non vulcanisé pourra toutefois être employée.

## Revendications

1. Dispositif (203, 204, 205, 206, 207) destiné à être interposé entre deux pièces (201, 202) d'un aéronef à voilure tournante qui sont susceptibles de subir un mouvement relatif répété, le dispositif comprenant :

   - au moins deux éléments d'armature (203A, 204A, 205A, 206A, 207A ; 203B, 204B, 205B, 206B, 207B) destinés à être montés sur l'une au moins des deux pièces (201, 202) de l'aéronef, et
   - au moins une couche (21) en élastomère disposée entre les deux éléments d'armature, ladite au moins une couche (21) étant délimitée par une première surface ($S_I$) appartenant au volume interne ($V_{int}$) du dispositif, une deuxième surface ($S_E$) appartenant également au volume interne ($V_{int}$) du dispositif et une surface extérieure ($S_{ext}$) n'appartenant pas au volume interne ($V_{int}$) du dispositif,

   ledit dispositif (203, 204, 205, 206, 207) comprenant, au sein du volume interne ($V_{int}$) au dispositif, au moins deux poches (210-214 ; 251-254 ; 230, 231; 260, 261 ; 270 ; 271) chacune disposée à une distance prédéterminée de la surface extérieure ($S_{ext}$), chaque poche étant remplie d'un produit (P) capable de s'écouler hors de sa poche lorsqu'une fissure s'est propagée depuis ladite surface extérieure ($S_{ext}$) vers la poche concernée, **caractérise en ce que** les deux poches (210-214; 251-254; 230; 231; 260; 261; 270; 271) sont indépendantes.

2. Dispositif selon la revendication 1, dans lequel le produit (P) présente une couleur différente de la couleur de ladite au moins une couche (21) en élastomère.

3. Dispositif selon l'une des revendications précédentes, dans lequel le produit (P) présente des propriétés de luminescence, par exemple obtenues avec un additif tel qu'un azurant optique, que ne présente pas la couche (21) en élastomère.

4. Dispositif selon l'une des revendications précédentes, dans lequel le produit (P) est choisi parmi un élastomère apte à être distingué visuellement de l'élastomère formant une couche (21) en élastomère, un liquide, un gaz sous pression, une pâte ou un gel.

5. Dispositif selon la revendication précédente, dans lequel le produit (P) étant un élastomère, celui-ci se présente sous la forme de miettes calibrées.

6. Dispositif selon la revendication 4, dans lequel le produit (P) étant un liquide ou un gaz sous pression, le dispositif comprend un capteur de pression de ce liquide ou de ce gaz sous pression.

**7.** Dispositif selon l'une des revendications précédentes, dans lequel lesdites au moins deux poches indépendantes sont situées à une même distance prédéterminée de la surface extérieure ($S_{ext}$).

**8.** Dispositif selon l'une des revendications 1 à 6, dans lequel lesdites au moins deux poches indépendantes sont situées à des distances prédéterminées différentes de la surface extérieure ($S_{ext}$).

**9.** Dispositif selon l'une des revendications précédentes, dans lequel la surface ($S_{f,T}$), de l'ensemble des poches, projetée orthogonalement sur une surface de référence ($S_{ref}$) de ladite au moins une couche (21) en élastomère représente au plus 5% de cette surface de référence, la surface de référence ($S_{ref}$) étant une surface présentant une forme identique à l'une et/ou l'autre des première et deuxième surfaces ($S_I$, $S_E$) délimitant ladite au moins une couche (21) en élastomère et qui sont dans le volume interne ($V_{int}$) au dispositif.

**10.** Dispositif selon la revendication précédente, dans lequel la surface ($S_{f,T}$), de l'ensemble des poches, projetée orthogonalement sur une surface de référence ($S_{ref}$) de ladite au moins une couche (21) en élastomère représente au plus 4% de cette surface de référence et de préférence au plus 3% de cette surface de référence.

**11.** Dispositif selon l'une des revendications précédentes, **caractérisé en ce qu'**il comprend, entre les deux armatures, un empilement (20) comportant ladite au moins une couche (21) en élastomère et au moins une coupelle (22) réalisée en un matériau non élastomère plus rigide que l'élastomère formant ladite au moins une couche (21) en élastomère.

**12.** Dispositif selon la revendication précédente, dans lequel au moins l'une desdites au moins deux poches indépendantes traverse au moins une couche (21) en élastomère et au moins une coupelle (22).

**13.** Dispositif selon l'une des revendications précédentes, dans lequel au moins l'une desdites au moins deux poches indépendantes s'étend d'un élément d'armature à l'autre.

**14.** Dispositif selon la revendication 11, dans lequel lesdites au moins deux poches indépendantes sont réalisées dans une couche en élastomère, sans traverser une coupelle.

**15.** Dispositif selon la revendication précédente, dans lequel lesdites au moins deux poches indépendantes sont réalisées dans une même couche en élastomère.

**16.** Dispositif selon la revendication 14, dans lequel lesdites au moins deux poches indépendantes sont réalisées dans deux couches en élastomère différentes.

**17.** Dispositif selon l'une des revendications précédentes, choisi parmi : une butée lamifiée, un amortisseur, un palier lamifié, une rotule lamifiée, une articulation lamifiée.

**Patentansprüche**

**1.** Vorrichtung (203, 204, 205, 206, 207), die dazu bestimmt ist, zwischen zwei Teilen (201, 202) eines Drehflügelflugzeugs eingesetzt zu werden, die imstande sind, eine wiederholte relative Bewegung auszuführen, wobei die Vorrichtung umfasst:

- mindestens zwei Bewehrungselemente (203A, 204A, 205A, 206A, 207A; 203B, 204B, 205B, 206B, 207B), die dazu bestimmt sind, auf mindestens einem der zwei Teile (201, 202) des Flugzeugs montiert zu werden, und
- mindestens eine Schicht (21) aus Elastomer, die zwischen den zwei Bewehrungselementen angeordnet ist, wobei die mindestens eine Schicht (21) von einer ersten Oberfläche ($S_I$), die zum inneren Volumen ($V_{int}$) der Vorrichtung gehört, einer zweiten Oberfläche ($S_E$), die ebenfalls zum inneren Volumen ($V_{int}$) der Vorrichtung gehört, und einer äußeren Oberfläche ($S_{ext}$), die nicht zum inneren Volumen ($V_{int}$) der Vorrichtung gehört, begrenzt ist,

wobei die Vorrichtung (203, 204, 205, 206, 207) innerhalb des inneren Volumens ($V_{int}$) der Vorrichtung mindestens zwei Beutel (210-214; 251-254; 230, 231; 260, 261; 270; 271) umfasst, die jeweils in einem vorbestimmten Abstand von der äußeren Oberfläche ($S_{ext}$) angeordnet sind, wobei jeder Beutel mit einem Produkt (P) gefüllt ist, das in der Lage ist, aus seinem Beutel zu fließen, wenn ein Riss sich von der äußeren Oberfläche ($S_{ext}$) zum betroffenen

Beutel ausgebreitet hat,
**dadurch gekennzeichnet, dass** die zwei Beutel (210-214; 251-254; 230; 231; 260; 261; 270; 271) unabhängig sind.

2. Vorrichtung nach Anspruch 1, wobei das Produkt (P) eine andere Farbe als die Farbe der mindestens einen Schicht (21) aus Elastomer aufweist.

3. Vorrichtung nach einem der vorstehenden Ansprüche, wobei das Produkt (P) Lumineszenzeigenschaften aufweist, die beispielsweise mit einem Additiv wie einem optischen Aufheller erhalten werden, die die Schicht (21) aus Elastomer nicht aufweist.

4. Vorrichtung nach einem der vorstehenden Ansprüche, wobei das Produkt (P) ausgewählt ist aus einem Elastomer, das dazu geeignet ist, sich visuell von dem Elastomer, das eine Schicht (21) aus Elastomer bildet, zu unterscheiden, einer Flüssigkeit, einem unter Druck stehenden Gas, einer Paste oder einem Gel.

5. Vorrichtung nach dem vorstehenden Anspruch, wobei, dadurch, dass das Produkt (P) ein Elastomer ist, es die Form von kalibrierten Krümeln aufweist.

6. Vorrichtung nach Anspruch 4, wobei, dadurch, dass das Produkt (P) eine Flüssigkeit oder ein unter Druck stehendes Gas ist, die Vorrichtung einen Drucksensor dieser Flüssigkeit oder dieses unter Druck stehenden Gases umfasst.

7. Vorrichtung nach einem der vorstehenden Ansprüche, wobei sich die mindestens zwei unabhängigen Beutel in einem gleichen vorbestimmten Abstand von der äußeren Oberfläche ($S_{ext}$) befinden.

8. Vorrichtung nach einem der Ansprüche 1 bis 6, wobei sich die mindestens zwei unabhängigen Beutel in verschiedenen vorbestimmten Abständen von der äußeren Oberfläche ($S_{ext}$) befinden.

9. Vorrichtung nach einem der vorstehenden Ansprüche, wobei die Oberfläche ($S_{f,T}$) der Gesamtheit der Beutel, die orthogonal auf eine Referenzoberfläche ($S_{ref}$) der mindestens einen Schicht (21) aus Elastomer projiziert wird, höchstens 5 % dieser Referenzoberfläche ausmacht, wobei die Referenzoberfläche ($S_{ref}$) eine Oberfläche ist, die eine Form aufweist, die identisch zur einen und/oder anderen der ersten und zweiten Oberfläche ($S_I$, $S_E$) ist, die die mindestens eine Schicht (21) aus Elastomer begrenzen und die im inneren Volumen ($V_{int}$) der Vorrichtung sind.

10. Vorrichtung nach dem vorstehenden Anspruch, wobei die Oberfläche ($S_{f,T}$) der Gesamtheit der Beutel, die orthogonal auf eine Referenzoberfläche ($S_{ref}$) der mindestens einen Schicht (21) aus Elastomer projiziert wird, höchstens 4 % dieser Referenzoberfläche und vorzugsweise höchstens 3 % dieser Referenzoberfläche ausmacht.

11. Vorrichtung nach einem der vorstehenden Ansprüche, **dadurch gekennzeichnet, dass** sie zwischen den zwei Bewehrungen einen Stapel (20) umfasst, der die mindestens eine Schicht (21) aus Elastomer und mindestens eine Schale (22) aufweist, die aus einem nicht elastomeren Material hergestellt ist, das steifer ist als das Elastomer, das die mindestens eine Schicht (21) aus Elastomer bildet.

12. Vorrichtung nach dem vorstehenden Anspruch, wobei mindestens einer der mindestens zwei unabhängigen Beutel mindestens eine Schicht (21) aus Elastomer und mindestens eine Schale (22) durchläuft.

13. Vorrichtung nach einem der vorstehenden Ansprüche, wobei sich mindestens einer der mindestens zwei unabhängigen Beutel von einem Bewehrungselement zum anderen erstreckt.

14. Vorrichtung nach Anspruch 11, wobei die mindestens zwei unabhängigen Beutel in einer Schicht aus Elastomer hergestellt sind, ohne eine Schale zu durchlaufen.

15. Vorrichtung nach dem vorstehenden Anspruch, wobei die mindestens zwei unabhängigen Beutel in einer gleichen Schicht aus Elastomer hergestellt sind.

16. Vorrichtung nach Anspruch 14, wobei die mindestens zwei unabhängigen Beutel in zwei verschiedenen Schichten aus Elastomer hergestellt sind.

17. Vorrichtung nach einem der vorstehenden Ansprüche, ausgewählt aus: einem beschichteten Anschlag, einem Dämpfer, einem beschichteten Lager, einem beschichteten Kugelgelenk, einem beschichteten Gelenk.

**EP 3 075 656 B1**

**Claims**

1. Device (203, 204, 205, 206, 207) intended to be interposed between two parts (201, 202) of a rotary-wing aircraft which are susceptible to repeated relative movement, the device comprising:

   - at least two frame members (203A, 204A, 205A, 206A, 207A; 203B, 204B, 205B, 206B, 207B) intended to be mounted on at least one of the two parts of the aircraft (201, 202), and
   - at least one elastomer layer (21) arranged between the two frame members, said at least one layer (21) being defined by a first surface ($S_I$) belonging to the internal volume ($V_{int}$) of the device, a second surface ($S_E$) also belonging to the internal volume ($V_{int}$) of the device and an outer surface ($S_{ext}$) not belonging to the internal volume of the device,

   said device (203, 204, 205, 206, 207) comprising, within the internal volume ($V_{int}$) of the device, at least two pockets (210-214; 251-254; 230; 231; 260; 261; 270; 271) each arranged at a predetermined distance from the outer surface ($S_{ext}$), each pocket being filled with a product (P), capable of flowing out of its pocket when a crack has propagated from said outer surface ($S_{ext}$) to the pocket in question, **characterised in that** the two pockets (210-214; 251-254; 230; 231; 260; 261; 270; 271) are independent from one another.

2. Device according to claim 1, wherein the product (P) is of a colour that is different from the colour of said at least one elastomer layer (21).

3. Device according to one of the preceding claims, wherein the product (P) has luminescence properties, for example obtained by means of an additive such as an optical brightener, which the elastomer layer (21) does not include.

4. Device according to one of the preceding claims, wherein the product (P) is selected from among elastomers which are capable of being visually distinguished from the elastomer forming an elastomer layer (21), a liquid, a pressurised gas, a paste or a gel.

5. Device according to the preceding claim, wherein the product (P) being an elastomer, it is in the form of calibrated crumbs.

6. Device according to claim 4, wherein the product (P) being a liquid or a pressurised gas, the device comprises a sensor measuring the pressure of the liquid or pressurised gas.

7. Device according to one of the preceding claims, wherein said at least two independent pockets are located at a same predetermined distance from the outer surface ($S_{ext}$).

8. Device according to any of claims 1 to 6, wherein said at least two independent pockets are located at different predetermined distances from the outer surface ($S_{ext}$).

9. Device according to any one of the preceding claims, wherein the surface ($S_{f,T}$) of all of the pockets, projected orthogonally onto a reference surface ($S_{ref}$) of said at least one elastomer layer (21) represents at most 5% of this reference surface, the reference surface ($S_{ref}$) being a surface with an identical shape to one and/or the other of the first and second surfaces ($S_I$, $S_E$) delimiting said at least one elastomer layer (21) and which are located within the internal volume ($V_{int}$) of the device.

10. Device according to the preceding claim, wherein the surface ($S_{f,T}$) of all of the pockets, projected orthogonally on a reference surface ($S_{ref}$) of said at least one elastomer layer (21) represents at most 4% of this reference surface and preferably at most 3% of this reference surface.

11. Device according to one of the preceding claims, **characterised in that** it comprises, between two frame members, a stack (20) having said at least one elastomer layer (21) and at least one cup (22) made of a non-elastomer material more rigid than the elastomer forming said at least one elastomer layer (21).

12. Device according to the preceding claim, wherein at least one of said two independent pockets passes through at least one elastomer layer (21) and at least one cup (22).

13. Device according to any one of the preceding claims, wherein at least one of said two independent pockets extends from one frame member to the other.

14. Device according to claim 11, wherein said at least two independent pockets are made in an elastomer layer, without going through the cup.

15. Device according to the preceding claim, wherein said at least two independent pockets are made in one same elastomer layer.

16. Device according to claim 14, wherein said at least two independent pockets are made in two different elastomer layers.

17. Device according to any one of the preceding claims, selected from among: a laminated abutment, a damper, a laminated bearing, a laminated ball and socket connection, a laminated articulated connection.

Fig. 1
(Art Antérieur)

Fig. 2
(Art Antérieur)

Fig. 3

Fig. 4(a)

Fig. 4(b)

Fig. 4(c)
(Coupe A-A)

Fig. 5(a)

Fig. 5(b)
(Coupe A-A)

EP 3 075 656 B1

Fig. 6(a)

Fig. 6(b)

Fig. 6(c)
Coupe B-B

Fig. 6(d)

*Fig. 7*

*Fig. 8*

Fig. 9(a)

Fig. 9(b)
(Coupe A-A)

EP 3 075 656 B1

Fig. 10 (a)

Fig. 10 (b)

Fig. 10 (c)
(Coupe C-C)

Fig. 11(a)

Fig. 11(b)

Fig. 11(c)
(Coupe B-B)

*Fig. 12(a)*

*Fig. 12(b)*

*Fig. 12(c)
(Coupe D-D)*

*Fig. 13(a)*

*Fig. 13(b)*

**EP 3 075 656 B1**

## RÉFÉRENCES CITÉES DANS LA DESCRIPTION

### Documents brevets cités dans la description

- FR 2949432 D1
- JP 2006349068 B